# EUROPÄISCHE PATENTSCHRIFT

(11) **EP 1 714 122 B1**
(45) Veröffentlichungstag und Bekanntmachung des Hinweises auf die Patenterteilung: **13.11.2013**
(21) Anmeldenummer: 04709201.0
(22) Anmeldetag: 09.02.2004
(51) Int. Cl.: G01K 1/10

(54) **HOCHTEMPERATURSENSOR**
HIGH-TEMPERATURE SENSOR
CAPTEUR HAUTE TEMPERATURE

(43) Veröffentlichungstag der Anmeldung: 25.10.2006
(73) Patentinhaber: Temperaturmeßtechnik Geraberg GmbH, 98693 Martinroda (DE)
(72) Erfinder: IRRGANG, Klaus, 98716 Geraberg (DE); IRRGANG, Barbara, 98716 Geraberg (DE); KÄMPF, Hartmut, 98716 Elgersburg (DE); HEINZ, Winfried, 98716 Elgersburg (DE); SCHÄTZLER, Klaus-Dieter, 98716 Geraberg (DE); BOJARSKI, Aldo, 01774 Höckendorf (DE); FICHTE, Werner, 01738 Colmitz (DE)
(74) Vertreter: Liedtke, Klaus
(86) Internationale Anmeldenummer: PCT/DE2004/000225
(87) Internationale Veröffentlichungsnummer: WO 2005/075949

(56) Entgegenhaltungen:
- EP-A- 0 774 650
- DE-C- 3 939 165
- DE-U- 29 823 459
- US-A- 5 388 908

## Beschreibung

Die Erfindung betrifft einen Hochtemperatursensor mit einem metallischen Schutzrohr und mit einem Messwiderstand, welcher von einem keramischen Pulver umgeben ist.

Mit metallischen Schutzrohr wird dabei ein metallisches Gehäuse bezeichnet, das die Bauteile des Temperatursensors umschließt, wobei ein das Messelement enthaltender Schutzrohrteil in das Medium hineinragt und ein äußerer Schutzrohrteil die nach Außen führenden Anschlussleitungen aufnimmt.

Unter Prozessanschluss wird die mechanische Verbindungsstelle des Temperatursensors mit dem Behältnis, in dem sich das Medium befindet, dessen Temperatur ermittelt werden soll verstanden, beispielsweise eine Rohrleitung.

Der elektrischer Anschluss ist die Koppelstelle der im Gehäuse verlaufenden Innenleitungen mit den äußeren Anschlussleitungen.

Bevorzugtes Einsatzgebiet ist die Verwendung in Temperaturmessstellen mit erhöhtem mechanischen und thermischen Belastungen, wie dies beispielsweise in Abgaskanälen von Verbrennungsmotoren der Fall ist.

Zur Verbesserung des Motormanagements von Verbrennungs- und Gasmotoren werden Temperaturfühler benötigt, deren Einsatztemperatur im Bereich von 600 °C ... 900 °C liegt. Die Messstellen für die Temperaturfühler liegen meist im motornahen Teil des Abgaskanals. Die bei Abgastemperaturmessungen vorliegenden chemisch-korrosiven, mechanischen und thermischen Einsatzbedingungen stellen sehr hohe Anforderungen an die Bauteile des Temperaturfühlers und erfordern aufwendige und komplizierte Mittel hinsichtlich der einzusetzenden Materialen sowie von diffizilen Maßnahmen zur stabilen Lagerung der Bauteile und der Gestaltung von Verbindungen der Bauteile.

Im Stand der Technik sind vielfältige Anordnungen beschrieben, die einzelne der vorgenannten Aufgaben lösen sollen.

Hierzu sind beispielsweise nach DE 199 34 738 A1 und DE 100 62 041 A1 Anordnungen bekannt, bei denen die Verbesserung der Aufbau- und der Verbindungstechnologie zwischen Sensor und Innenleitungen dadurch erreicht werden soll, dass der anschlussseitige Bereich des Temperatursensors mit temperaturfesten, elektrisch nicht leitenden Material vergossen ist oder über eine überlappende Verbindung von Thermistorenanschlüssen und Signalinnenleiter bei paßgenauem Sitz erfolgt.

Technische Maßnahmen zur Sicherung des Messelementes sind in DE 30 12 787 A1 und DE 199 22 928 A1 angegeben.

Zum Schutzes gegen sensorschädigende Atmosphären sind nach DE 298 23 459 UI und EP 0 774 650 A1 verschiedene Maßnahmen bekannt.

In EP 0 774 650 A1 wird vorgeschlagen, im Anschlussbereich eines rohrförmigen Gehäuses eine mechanisch feste und flüssigkeitsdichte Verbindung vorzusehen, die den Zutritt von Luftsauerstoff aus der Umgebung über ein Anschlusskabel in das Gehäuse ermöglicht. Ferner ist es nach DE 298 23 459 U1 bekannt, den Sauerstoffzutritt über eine spezielle Halsrohröffnung zu ermöglichen. Nachteilig sind hierbei neben den komplizierten Aufbauten die Notwendigkeit der Anbringung von Öffnungen an den Sensorfassungen.

Möglichkeiten zur Verbesserung messtechnischer Wärmeableitungs- und Strahlungsfehler werden in DE 199 39 493 A1 und DE 298 23 379 U1 beschrieben.

Zur Verbesserung des Schutzes der mechanischen Armaturkomponenten sind in DE 100 34 265 A1 und DE 199 41 188 A1 Anordnungen angegeben, die durch unterschiedliche Durchmessergestaltung eine Anpassung an Festigkeits- und Fertigungsvorgaben zu erreichen.

Nachteilig sind bei den beschriebenen Anordnungen neben der aufwendigen und damit kostenintensiven Herstellung auch, dass jeweils nur einzelnen der genannten Belastungen begegnet wird, so dass die Ursachen für Funktionsstörungen messtechnischer; elektrischer oder mechanischer Art nicht generell beseitigt werden.

Ferner ist es nach DE 42 07 317 C2, DE 16 48 261 A und US-PS 52 09 571 A bekannt, bei in keramischen Schutzrohren angeordneten Thermoelementen in den Schutzrohren Pulver zu verwenden, denen sauerstoffreduzierende Komponenten beigemischt sind, um die bei diesen Anordnungen verwendeten Thermodrähte vor Oxidation zu schützen und damit deren Lebensdauer zu verlängern. Für Anordnungen mit Platin-Widerstands-Sensoren sind diese Maßnahmen jedoch nicht möglich, weil dort reduzierende Bedingungen die Lebensdauer des Platinwiderstandes verringern würden.

Aufgabe der Erfindung ist es, einen Hochtemperatursensor der eingangs angegebenen Art anzugeben, der bei Temperaturen von mindestens 600° C eingesetzt werden kann, hohen mechanische und chemischen Belastungen standhält, technologisch günstig hergestellt werden kann und darüber hinaus die Zuverlässigkeit und Funktionssicherheit sowie die Lebensdauer gegenüber bekannten Temperatursensoren verbessert.

Erfindungsgemäß wird diese Aufgabe durch einen Hochtemperatursensor mit den in Anspruch 1 angegebenen Merkmalen gelöst.

Vorteilhafte Ausgestaltungen des erfindungsgemäßen Hochtemperatursensors sind in den Unteransprüchen angegeben.

Die Erfindung wird im folgenden anhand eines Ausführungsbeispieles näher erläutert.

In den zugehörigen Zeichnungen zeigen
- Figur 1: einen Längsschnitt durch die schematische Darstellung eines Hochtemperatursensor in gerader Ausführung,
- Figur 2: einen Längsschnitt durch die schematische Darstellung eines Hochtemperatursensor in gewinkelter Ausführung mit Isolierung durch Keramikkapillaren und Isolierschläuchen aus keramischen Fasern,
- Figur 3: einen Längsschnitt durch die schematische Darstellung eines Hochtemperatursensor in gewinkelter Ausführung mit vollständiger Isolierung durch Isolierschläuche aus keramischen Fasern,
- Figur 4: einen Längsschnitt durch die schematische Darstellung eines Hochtemperatursensor mit Mantelleitung,
- Figur 5: die ausschnittsweise Darstellung eines Hochtemperatursensors mit einstücker keramischer Kapselhülse für Sensor und Mineralleitung,
- Figur 6: einen Längsschnitt durch die schematische Darstellung eines Hochtemperatursensors mit Profilinnenleitern
- und Figur 7: ein Draufsicht auf den Querschnitt eines Innenaufbaus mit profilierten Innenleiterblech.

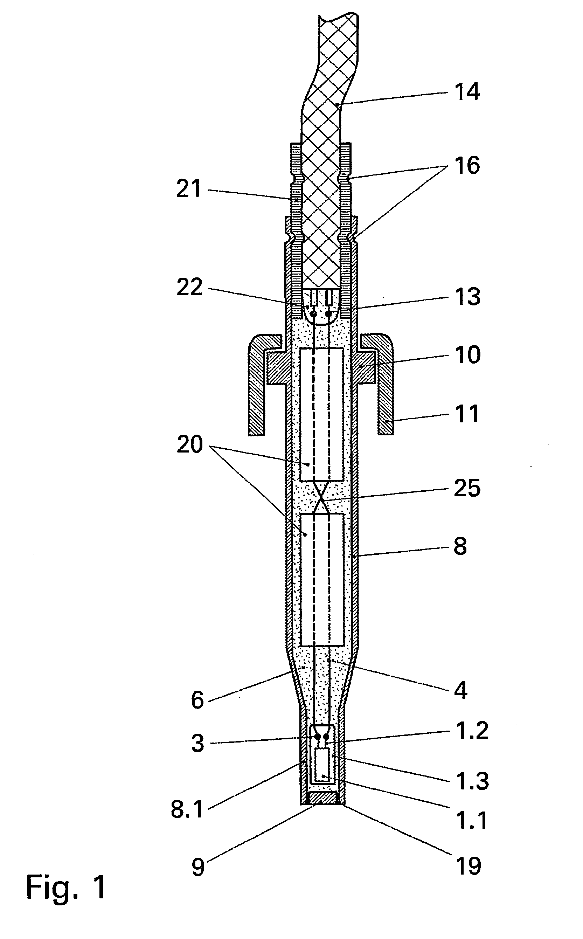

Der in Figur 1 dargestellte Hochtemperatursensor weist einen gekapselten Messwiderstand 1 in Form eines Platin-Dünnschicht-Widerstandes 1.1 mit Widerstandsanschlussdrähten 1.2 auf, der in einer Kapselhülse 1.3 aus Keramik angeordnet ist und mit in diesem eingekitteten, aus einer Nickellegierung bestehenden drahtförmigen Innenleitern 4 über die Schweißstelle 3 elektrisch verbunden ist.

Die Innenleitungsdrähte sind durch keramischen Isolationsteilstücken, insbesondere in Form von Keramikkapillaren 20, geführt, wobei in definierten Abständen Verkreuzungen 25 der Innenleitungsdrähte 4 angeordnet sind, um zug- oder schubwirksame Längskräfte als Folge von Dilatation vom gekapselten Messwiderstand 1 fernzuhalten. Die Innenleitungsdrähte 4 sind am kalten Ende des den ganzen Sensoraufbau beinhaltenden Schutzrohres 8 über die elektrische Verbindungsstelle 13, die mit dem Kleber 22 umhüllt ist, mit dem Anschlusskabel 14 verbunden.

Um das Anschlusskabel 14 zugsicher mit dem Schutzrohr 8 zu verbinden, ist zwischen dem Anschlusskabel 14 und dem Schutzrohr 8 ein Zusatzbauteil 21 angeordnet, das über mehrfache Verbindungsstellen in Form von Sicken 16 das Anschlusskabel 14 mit dem Schutzrohr 8 verbinden. Damit der gekapselte Messwiderstand 1 stoßgeschützt im Schutzrohr 8 angeordnet ist, wird er mit keramischem Pulver 6 fest im Schutzrohr 8 eingerüttelt. Durch Wärmedehnung des Schutzrohres 8 verursachte Pulverlockerungen werden durch die Ausdehnung des als Aluminiumhülse ausgebildeten Zusatzbauteiles 21 in Verbindung mit dem überstehendem Material des Kabels 14 kompensiert, wobei die maßliche Abstimmung für die relative Null-Volumen-Dilatation auf den Arbeitspünkt des Hochtemperatursensors ausgerichtet ist.

Dem Keramikpulver 6 sind sauerstoffabgehende oxidische Pulver beigemischt, die oberhalb von 500 °C Sauerstoff abgeben. Besonders geeignet hierzu ist Mangan-(IV)-oxid. Auf diese Weise wird der Bildung einer reduzierenden Atmosphäre und damit auch Diffusionsprozessen am Messwiderstand 1.1 bzw. der Absenkung des Sauerstoffpartialdruckes vorgebeugt. Es konnte nachgewiesen werden, dass in geschlossenen Sensorsystemen aus nichtoxidationsbeständigem metallischen Material mit zunehmender Temperatur der Sauerstoffpartialdruck sinkt. Ein geschlossenes System entsteht durch messwiderstandsseitig dicht verschweißte und anschlussseitig dicht vergossene metallische Temperaturfühlerausführungen.

Am Schutzrohr 8 ist der Prozessanschluss angebracht, der hier aus einem am Schutzrohr 8 angeschweissten Dichtbund 10 und der Überwurfmutter 11 besteht. Es ist jedoch auch möglich, das Schutzrohr 8 mit Außengewindearmaturen für Einschraubmuffen an der Messstelle zu versehen. Das Schutzrohr 8 ist zweckmäßiger Weise in dem Bereich in dem sich der Messwiderstand 1.1 befindet, mit einer Verjüngung 8.1 versehen. Der Schutzrohrboden 9 ist mit dem unteren Ende des Schutzrohres 8 dicht verschweißt. Das Schutzrohr 8 mit Boden 9 kann auch einstückig als Drehteil ausgebildet sein.

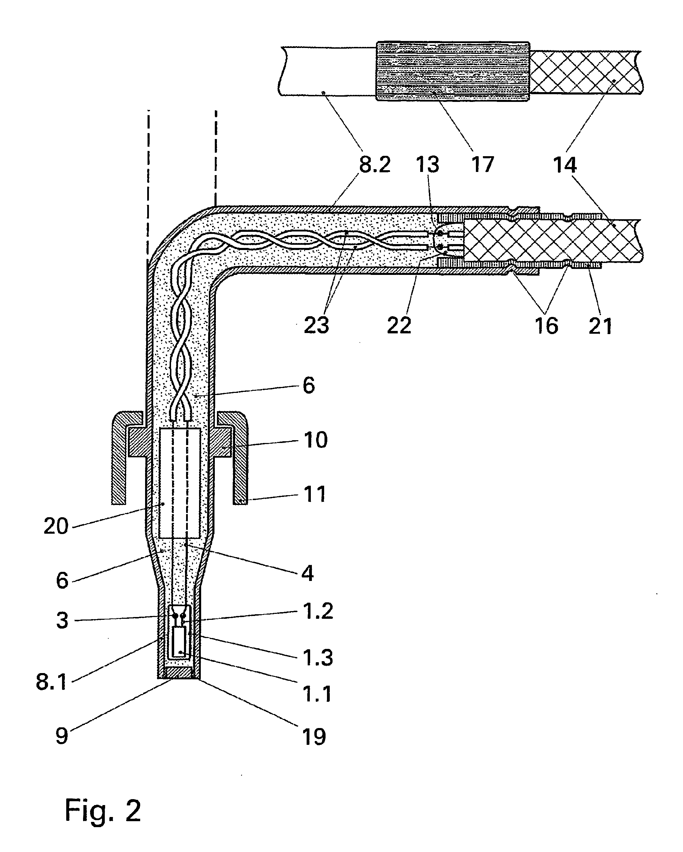

Der Kabelabgang des Anschlusskabels 14 ist vorteilhaft gegen mechanische Beanspruchungen durch Knickschutzfedern oder durch die in Figur 2 dargestellte Kunststoffverspritzung 17 gesichert.

Es ist auch möglich, Pulverlockerungen dadurch zu vermeiden, dass das keramische Pulver 6 zusätzliche Beimengungen eines Pulvers enthält, welches einen deutlich höheren Volumenausdehnungskoeffizient aufweist als das Aluminium- bzw. Magnesiumoxid. Eine besonders vorteilhafte Anordnung ergibt sich dadurch, dass das keramische Pulver 6 schichtweise im Schutzrohr 8 eingebracht ist, wobei in der Messspitze, in der sich der Messwiderstand befindet, Aluminiumoxid eingebracht ist, während sich im mittleren Teil der Anordnung ein Gemisch von Aluminiumoxid und sauerstoffspendenden Oxidverbindungen befindet und im sich daran anschließenden Kabelanschlussteil ein Gemisch aus Aluminiumoxid und einem Pulver mit höherem Volumenausdehnungskoeffizienten eingebracht ist.

Bei der in Figur 2 dargestellten Anordnung stimmen der in das zu messende Medium ragende Teil des Temperatursensors sowie die aus Dichtbund 10 und Überwurfmutter 11 bestehende Prozessanschlussstelle mit der in Figur 1 dargestellten Anordnung überein. Das Schutzrohr 8 weist im äußeren Bereich das um 90° abgewinkelte Schutzrohrteil 8.2 auf. Die in diesem Bereich verlaufenden drahtförmigen Innenleiter 4 sind mit Isolierschläuchen 23 aus keramischen Fasern versehen und leicht verdrillt. Der Anschluss mit dem Anschlusskabel 14 am abgewinkelten Schutzrohrteil 8.2 erfolgt an der mit Kleber 22 überhüllten elektrischen Verbindungsstelle 13. Zwischen der Anschlussleitung 14 und dem Schutzrohr 8 ist mindestens ein als Hülse ausgebildetes Zusatzbauteil 21 angeordnet, welches einen höheren Ausdehnungskoeffizient als das Schutzrohr 8 aufweist, so dass durch Temperaturschwankungen verursachte unterschiedliche Volumenänderungen von Schutzrohr 8 und Keramikpulver 6 ausgeglichen werden und Hohlräume vermieden werden. Vorzugsweise wird eine Zwischenhülse aus Aluminium verwendet.

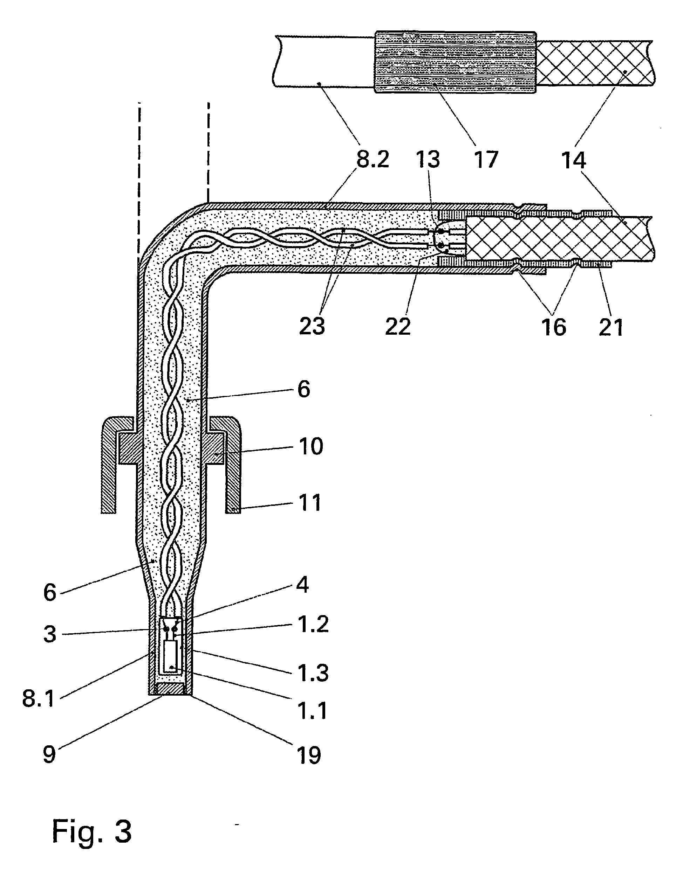

Figur 3 zeigt einen Längsschnitt durch eine Variante eines Hochtemperatursensor in gewinkelter Ausführung, bei der die drahtförmigen Innenleiter 4 vollständig durch Isolierschläuche 23 aus keramischen oder glaskeramischen Fasern isoliert sind.

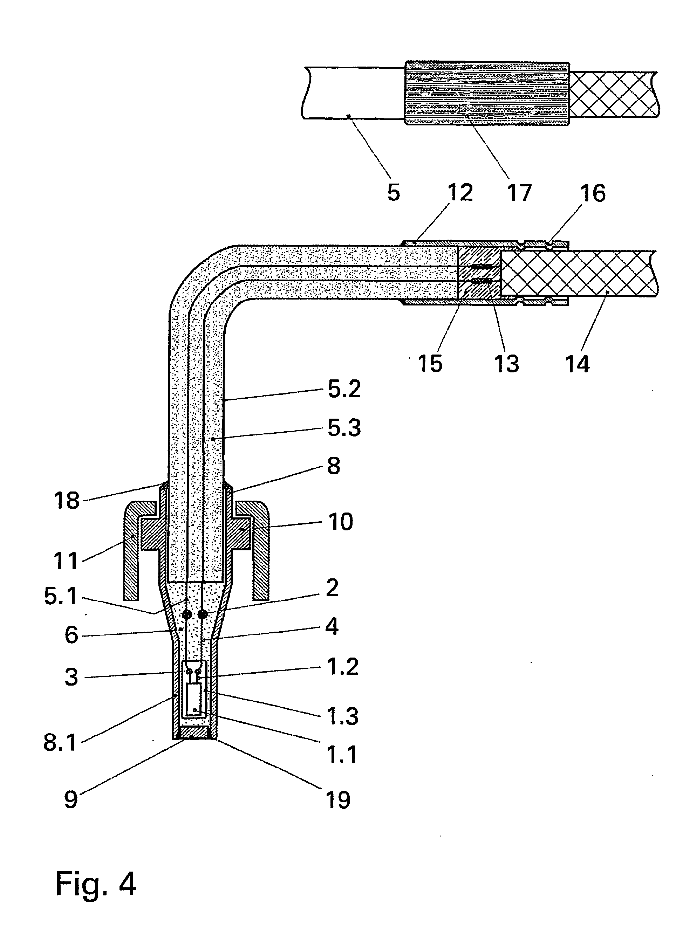

In Figur 4 ist eine Ausführungsform dargestellt, bei der aus dem Schutzrohr 8 eine abgewinkelte mineralisolierte Mantelleitung 5 führt. Es sind natürlich in gleicher Weise auch gestreckte Anordnungen ausführbar. Am Ende der Mantelleitung 5 ist auf deren äußeren Metallmantel 5.2 eine Zwischenhülse 12 geschweißt. Im Inneren der Zwischenhülse 12 befinden sich in einem Verguss 15 Verbindungsstellen 13, mit denen die Innenleiter 5.1 der Mantelleitung 5 mit dem Anschlusskabel 14 verbunden sind. Das Anschlusskabel 14 ist mit Hilfe der Sicken 16 so befestigt, dass sich eine Zugentlastung ergibt. Im Bereich des Prozessanschlusses ist das Schutzrohr 8 so an der Mantelleitung 5 angeschweißt, dass sich die Schweißnaht 18 an der Mantelleitung außerhalb der Mediums befindet und damit vor dessen aggressiven Einflüssen geschützt ist. In der hier gezeigten Ausführung ist das Schutzrohr 8 gegenüber den in den Figuren 1 und 2 dargestellten Anordnungen etwas kürzer ausgeführt, weist jedoch eine ähnliche Kontur auf und enthält die gesamte Konfiguration des Hochtemperatusrsensors. Der Innenraum des medienseitigen Sensorteiles ist mit Keramikpulver 6 gefüllt, dem sauerstoffabgebende oxidische Pulver beigemischt sind. Die Innenleiter 4 sind durch Verbindungsstellen 2 mit dem Mantelleitungsinnenleiter 5.1 und mit der Anschlussdrahtverbindungsstelle 3 mit dem Messwiderstand 1.1 verbunden. Der Schutzrohrboden 9 ist mit der Schweißnaht 19 an der Schutzrohrverjüngung 8.1 befestigt. Der Prozessanschluss besteht aus dem am Schutzrohr 8 angeschweißten Dichtbund 10 und der Überwurfmutter 11, kann aber auch mit einer Druckschraube oder andere Befestigungsmittel ausgeführt sein.

Eine hier nicht dargestellte vorteilhafte Ausführung sieht vor, dass direkt hinter der Mantelleitung 5 innerhalb des Schutzrohres 8 ein metallisches ringförmiges Bauteil mit hohem Ausdehnungskoeffizienten und hochoxidierter Oberfläche angeordnet ist.

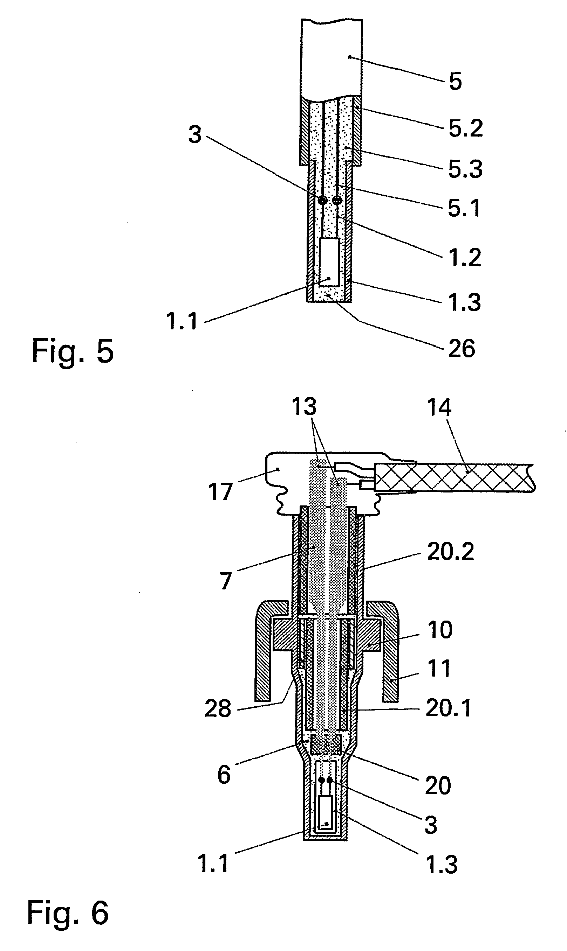

In einer weiteren, in **Figur 5** erläuterten Ausführung, sind die Mantelinnenleitungsdrähte 5.1, die Pulverfüllung 5.3 und der Messwiderstand 1.1 mit seinen Anschlussdrähten 1.2 sowie die Anschlussdrahtverbindungsstelle 3 von einer verlängerten, keramischen Kapselhülse 1.3 umgeben. Die Kapselhülse 1.3 und Zwischenräume zur Mantelleitung sind mit Hochtemperaturkitt 26 ausgefüllt, so dass eine einstückige Form entsteht. Im Gegensatz zu den im Stand der Technik bekannten Anordnungen wird dabei auf eine Verbindung dieses Kittverbandes zum Schutzrohr 8 bewusst verzichtet, so dass radiale Dilatationsbewegungen die Sensorfunktion nicht beeinträchtigen.

**Figur 6** zeigt im Längsschnitt eine schematische Darstellung eines Hochtemperatursensors, bei dem als Innenleiter 4 gestanzte Profilteile 7 dienen, auf deren Enden röhrenförmige Keramik-Formteile 20.1 und 20.2 mit profilierten Innen- und Außenkonturen aufgeschoben sind. Die profilierten Innenleiterbleche 7 sind vorzugsweise Stanzteile und sensorseitig mit dem Messwiderstand 1.1 verschweißt. Der Messwiderstand 1.1 sowie die Verbindungsstelle 3 sind mit einer keramischen Kapselhülse 1.3 überzogen, welche mit Hochtemperaturkitt 26 ausgefüllt ist. Die Anordnung ist in einem Schutzrohr 8 angeordnet und mit Keramikpulver 6, dem sauerstoffabgebende oxidische Pulver beigemischt sind, ausgefüllt, wobei das Schutzrohr im sensorfernen Teil einen großen Innendurchmesser aufweist, so dass um die Keramik-Formteile 20, bzw. 20.1 und 20.2 partiell hochoxidierte, metallische Ringe 28 mit hohem Ausdehnungskoeffizienten angeordnet sind, wobei zwischen Keramik-Formteil 20.1, 20.2 und metallischen Ringen 28 deutliche Spaltweiten bestehen. An diesen Enden der Profillteile 7 ist das Anschlusskabel 14 angeschlossen und der Bereich der Verbindung der Profillteile 7 mit dem Anschlusskabel 14 ist mit einer Kunststoffverspritzung 17 gegen mechanische Beanspruchungen geschützt.

Eine vorteilhafte Ausführung sieht vor, dass im oberen Teil des Schutzrohrs 8 metallische Bauteile mit hohem Ausdehnungskoeffizient und hochoxidierter Oberfläche angeordnet sind, die bei steigenden Temperaturen die relative Volumenverringerung des vom Keramikpulver 6 eingenommene Volumens gegenüber dem Schutzrohrinnenraum ausgleichen und von der voroxidierten Oberfläche Sauerstoff in den Schutzrohr-Innenraum abgeben.

Ferner ist es möglich, dass als metallische Bauteile eine Füllung aus metallischen Körnern eingebracht ist, die stark voroxidiert sind und einen gegenüber dem Schutzrohres 8 relativ großen Ausdehnungseffizient besitzen.

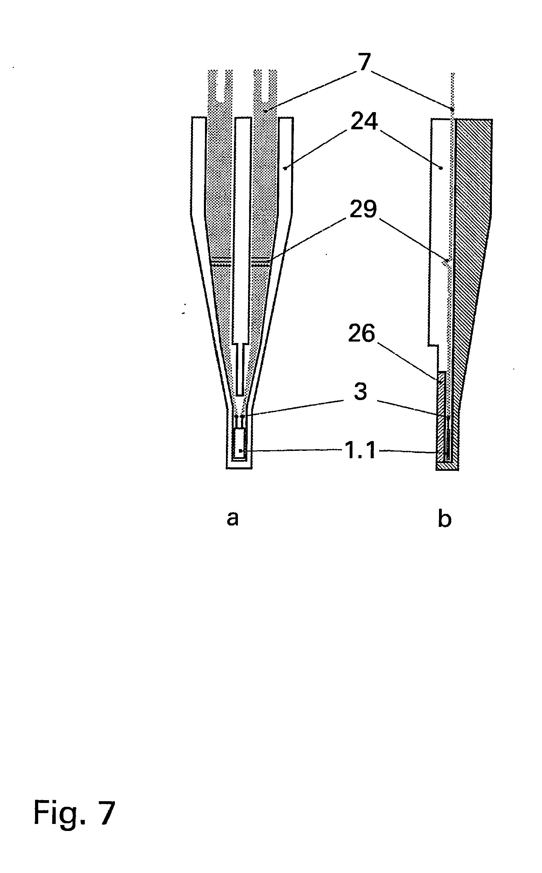

Bei der in **Figur 7** darstellten Anordnung sind die profilierten Innenleiterbleche 7 in ein oder in mehrere Keramikeinlegeteile 24 eingefügt, wobei an die Innenleiterbleche 7 der Messwiderstand 1.1 angeschweißt und mit Hochtemperaturkitt 26 gesichert ist. Die Innenleiterbleche 7 weisen eine Dehnungsausgleichstelle 29 auf, die vorzugsweise in Form einer V-förmigen Sicke gestaltet ist.

### BEZUGSZEICHENLISTE

- 1: gekapselter Messwiderstand
1.1 Messwiderstand
1.2 Messwiderstandsanschlussdraht
1.3 Kapselhülse
- 2: Verbindungsstelle zum Mantelinnenleiter
- 3: Anschlussdrahtverbindungsstelle
- 4: Innenleiter
- 5: Mantelleitung
5.1 Innenleiter der Mantelleitung
5.2 äußerer Metallmantel der Mantelleitung
5.3 Pulverfüllung der Mantelleitung
- 6: Keramikpulver
- 7: profiliertes Innenleiterblech
- 8: Schutzrohr
8.1 Verjüngung
8.2 abgewinkeltes Schutzrohrteil
- 9: Schutzrohrboden
- 10: Dichtbund
- 11: Überwurfmutter
- 12: Zwischenteil
- 13: Verbindungsstelle zum Anschlusskabel
- 14: Anschlusskabel
- 15: Vergussmasse
- 16: Sicke
- 17: Kunststoffumspritzung
- 18: Schweißnaht an Mantelleitung
- 19: Schweißnaht am Schutzrohrboden
- 20: Keramik-Formteil
20.1 keramisches Führungsteil für Innenleiterprofile
20.2 oberes keramisches Formstück
- 21.: Zusatzbauteil
- 22: Dichtungskleber
- 23: Isolierschlauch aus keramischen Fasern
- 24: Keramikeinlegeteil
- 25: Kreuzung der Innenleitungsdrähte
- 26: Hochtemperaturkitt
- 28: metallischer Ring, partiell hochoxidiert
- 29: Dehnungsausleich

## Patentansprüche

1. Hochtemperatursensor mit einem in einem Keramikteil angeordneten Messwiderstand (1.1), welcher von einem keramischen Pulver (6) umgeben ist, **dadurch gekennzeichnet, dass**
- das Keramikteil als keramische Kapselung (1.3) für den Messwiderstand (1.1) ausgebildet ist und die zugenlasteten Messwiderstandsanschlussdrähte (1.2) mit Innenleiterdrähten (4) und im weiteren mit einer elektrischen Anschlussleitung (14) verbunden sind,
- der gekapselte Messwiderstand (1.1) und die Innenleiterdrähte (4) in einem metallischen Schutzrohr (8) angeordnet sind, welches im Bereich des Messwiderstandes (1.1) eine Verjüngung aufweist,
- das keramische Pulver (6) im Schutzrohr (8) dicht eingefüllt ist und Beimengungen von sauerstoffspendenden Oxid-Verbindungen enthält
- auf der Anschlussseite zwischen der Anschlussleitung (14) und dem Schutzrohr (8) zusätzliche Bauteile angeordnet sind, die einen höheren keramischen Ausdehnungsbeiwert als das Schutzrohr (8) besitzen und
- das keramische Pulver (6) Beimengungen von, bei Betriebstemperaturen des Sensors von oberhalb von 500°C, sauerstoffspendenden Oxidverbindungen enthält.

2. Hochtemperatursensor nach Anspruch 1, **dadurch gekennzeichnet, dass** als keramisches Pulver (6) Aluminiumoxid oder Magnesiumoxid verwendet wird, dem sauerstoffabgebende metallische oder anorganisch-nichtmetallische Redoxmittel in volumenmäßiger Abhängigkeit vom Schutzrohrinnenraum beigemischt sind.

3. Hochtemperatursensor nach Anspruch 1 oder 2, **dadurch gekennzeichnet, dass** die keramische Kapselung (1.3), in der der Messwiderstand (1.1) angeordnet ist, so lang ausgeführt ist, dass sie über die Verbindungsstelle (3) von Messwiderstandsanschlussdrähten (1.2) zu Innenleitungsdrähten (4) mit eigener keramischen Isolation oder zu Innenleitungsdrähten (4.1) einer mineralisolierten Mantelleitung (5) reicht, und der Raum zwischen Messwiderstand (1.1) mit den Messwidersandsanschlussdrähten (1.2) und der Kapselung (1.3) mit Hochtemperaturkitt (26) ausgefüllt ist.

4. Hochtemperatursensor nach einem der vorhergehenden Ansprüche, **dadurch gekennzeichnet, dass** als zusätzliches Bauteil eine Zwischenhülse (21) aus Aluminium angeordnet ist.

5. Hochtemperatursensor nach einem der vorhergehenden Ansprüche, **dadurch gekennzeichnet, dass** als Messwiderstand (1.1) ein Platin-Dünnschicht-Messwiderstand verwendet wird.

6. Hochtemperatursensor nach einem der Ansprüche 3 bis 5, **dadurch gekennzeichnet, dass** die mineralisolierte Mantelleitung (5) an das Schutzrohr (8) angeschweißt ist, wobei sich die Schweißstelle außerhalb des medienberührenden Schutzrohrteils unmittelbar hinter einem Prozessanschluss befindet.

7. Hochtemperatursensor nach Anspruch 6, **dadurch gekennzeichnet, dass** der Prozessanschluss einen am Schutzrohr (8) angeschweißten Bund (10) enthält, der mit Hilfe von lösbaren Verbindungsmitteln am Messobjekt befestigt werden kann.

8. Hochtemperatursensor nach einem der Ansprüche3 bis 7, **dadurch gekennzeichnet, dass** die keramische Kapselung (1.3) so über den Messwiderstand (1.1), die Verbindungsstelle (3) von Messwiderstandsanschlussdrähten (1.2) zu den herausragenden Teilen der Innenleiter (5.1) der mineralisolierten Mantelleitung (5) geschoben ist, dass sie bis zum Ende des Außenrohres (5.2) der Mantelleitung (5) reicht oder leicht unter das Außenrohr (5.2) der Mantelleitung (5) ragt, wobei der Innenraum der keramischen Kapselung (1.3) mit Hochtemperaturkitt (26) ausgefüllt ist, und so ein einstückiger Verband vorliegt.

9. Hochtemperatursensor nach Anspruch 8, **dadurch gekennzeichnet, dass** die innere Verbindungsstelle (15) zwischen der Mantelleitung (5) und dem Anschlusskabel (14) oder zwischen dem Ende des Schutzrohres (8) und dem Anschlusskabel (14) eine hochtemperaturstabile Kunststoffverspritzung (17) aufweist.

10. Hochtemperatursensor nach Anspruch 1, **dadurch gekennzeichnet, dass** profilierte Innenleitungsbleche (7) als Innenleitungsdrähte (4) eingesetzt werden, auf deren Enden röhrenförmige Keramik-Formteile (20.1, 20.2) mit profilierten Innen- und Außenkonturen aufgeschoben sind, wobei die profilierten Innenleitungsbleche (7) sensorseitig mit dem Messwiderstand (1.1) verschweißt und der Messwiderstand (1.1) und die Schweißstelle zwischen Messwiderstand (1.1) und Innenleitungsbleche (7) mit der keramischen Kapselung (1.3) überzogen sind, welche mit Hochtemperaturkitt (26) ausgefüllt ist,
dass dieser Aufbau in dem Schutzrohr (8) angeordnet ist, wobei das Schutzrohr (8) mit dem Keramikpulver (6), das sauerstoffabgebende Oxide enthält, ausgefüllt ist, dass das Schutzrohr (8) im messwiderstandsfernen Teil einen größeren Innendurchmesser aufweist, dass um die Keramik-Formteile (20.1, 20.2) metallische Ringe (28) mit hohem Ausdehnungskoeffizienten angeordnet sind und zwischen den Keramik-Formteilen (20.1, 20.2) und den metallischen Ringen (28) große Spaltweiten bestehen und dass an die Enden der Innenleitungsbleche (7) das Anschlusskabel (14) angeschlossen ist.

11. Hochtemperatursensor nach einem der vorhergehenden Ansprüche, **dadurch gekennzeichnet, dass** das Schutzrohr (8) als Tiefziehteil mit angearbeiteten Dichtbund oder als Drehteil mit einer Tiefloch-Bohrung ausgeführt ist.

12. Hochtemperatursensor nach einem der vorhergehenden Ansprüche, **dadurch gekennzeichnet, dass** im oberen und/oder mittleren Teil des Schutzrohrs (8) metallische Bauteile mit hohen Ausdehnungskoeffizient und partiell hochoxidierter Oberfläche angeordnet sind, die bei steigenden Temperaturen die relative Volumenverringerung des vom Keramikpulver (6) eingenommene Volumens gegenüber dem Schutzrohrinnenraum ausgleichen und von der hochoxidierten Oberfläche Sauerstoff in den Schutzrohrinnenraum abgeben.

13. Hochtemperatursensor nach Anspruch 12, **dadurch gekennzeichnet, dass** als metallische Bauteile eine Füllung aus metallischen oder anorganischnichtmetallischen Körnern eingebracht ist, die stark oxidiert sind und einen gegenüber dem Schutzrohr (8) relativ großen Ausdehnungseffizient besitzen.

## Claims

1. High-temperature sensor comprising a measuring resistor (1.1), which is arranged in a ceramic part and is surrounded by a ceramic powder (6), **characterized in that**
- the ceramic part is formed as a ceramic encapsulation (1.3) for the measuring resistor (1.1) and the tension-relieved measuring resistor connection wires (1.2) are connected to internal conductor wires (4) and furthermore to an electrical connection line (14),
- the encapsulated measuring resistor (1.1) and the internal conductor wires (4) are arranged in a metallic protective tube (8), which has a narrowing in the region of the measuring resistor (1.1),
- the ceramic powder (6) is compactly filled in the protective tube (8) and contains admixtures of oxygen-providing oxide compounds,
- additional components, which have a higher ceramic expansion coefficient than the protective tube (8) are arranged on the connection side between the connection line (14) and the protective tube (8) and
- the ceramic powder (6) contains admixtures of oxygen-providing oxide compounds, providing oxygen at operating temperatures of the sensor of above 500°C.

2. High-temperature sensor according to Claim 1, **characterized in that** aluminium oxide or magnesium oxide admixed with oxygen-providing metallic or inorganic-nonmetallic redox agents in volumetric dependence on the interior space of the protective tube is used as the ceramic powder (6).

3. High-temperature sensor according to Claim 1 or 2, **characterized in that** the ceramic encapsulation (1.3), in which the measuring resistor (1.1) is arranged, is made to be of such a length that it reaches beyond the connecting point (3) of measuring resistor connection wires (1.2) to internal conductor wires (4) with their own ceramic insulation or to internal conductor wires (4.1) of a mineral-insulated sheathed cable (5), and the space between the measuring resistor (1.1) with the measuring resistor connection wires (1.2) and the encapsulation (1.3) is filled with high-temperature cement (26).

4. High-temperature sensor according to one of the preceding claims, **characterized in that** an intermediate sleeve (21) of aluminium is arranged as the additional component.

5. High-temperature sensor according to one of the preceding claims, **characterized in that** a platinum thin-film measuring resistor is used as the measuring resistor (1.1).

6. High-temperature sensor according to one of Claims 3 to 5, **characterized in that** the mineral-insulated sheathed cable (5) is welded to the protective tube (8), the welding point being located outside the part of the protective tube that is in contact with the medium, directly behind a process connection.

7. High-temperature sensor according to Claim 6, **characterized in that** the process connection includes a collar (10), which is welded to the protective tube (8) and can be fastened to the object being measured with the aid of releasable connecting means.

8. High-temperature sensor according to one of Claims 3 to 7, **characterized in that** the ceramic encapsulation (1.3) has been pushed over the measuring resistor (1.1), the connecting point (3) of measuring resistor connection wires (1.2) to the protruding parts of the internal conductors (5.1) of the mineral-insulated sheathed cable (5) such that it reaches up to the end of the outer tube (5.2) of the sheathed cable (5) or protrudes slightly under the outer tube (5.2) of the sheathed cable (5), the internal space of the ceramic encapsulation (1.3) being filled with high-temperature cement (26), thus providing a one-piece assembly.

9. High-temperature sensor according to Claim 8, **characterized in that** the internal connecting point (15) between the sheathed cable (5) and the connection cable (14) or between the end of the protective tube (8) and the connection cable (14) has a moulded plastic fitting (17) that is stable at high temperature.

10. High-temperature sensor according to Claim 1, **characterized in that** profiled internal conductor plates (7), onto the ends of which tubular ceramic shaped parts (20.1, 20.2) with profiled inner and outer contours have been pushed, are used as internal conductor wires (4), the profiled internal conductor plates (7) being welded on the sensor side to the measuring resistor (1.1) and the measuring resistor (1.1) and the welding point between the measuring resistor (1.1) and the internal conductor plates (7) being covered with the ceramic encapsulation (1.3), which is filled with high-temperature cement (26), **in that** this structure is arranged in the protective tube (8), the protective tube (8) being filled with the ceramic powder (6), which contains oxygen-providing oxides, **in that** the protective tube (8) has a greater internal diameter in the part remote from the measuring resistor, **in that** metallic rings (28) with a high expansion coefficient are arranged around the ceramic shaped parts (20.1, 20.2) and there are great gap widths between the ceramic shaped parts (20.1, 20.2) and the metallic rings (28), and **in that** the connection cable (14) is connected to the ends of the internal conductor plates (7).

11. High-temperature sensor according to one of the preceding claims, **characterized in that** the protective tube (8) is formed as a deep-drawn part with a sealing collar formed on it or as a turned part with a deep-hole bore.

12. High-temperature sensor according to one of the preceding claims, **characterized in that** metallic components with a high expansion coefficient and a partially highly oxidized surface are arranged in the upper and/or middle part of the protective tube (8), compensate for the relative reduction in volume of the volume taken up by the ceramic powder (6) in comparison with the internal space of the protective tube when there are rising temperatures and give off oxygen into the internal space of the protective tube from the highly oxidized surface.

13. High-temperature sensor according to Claim 12, **characterized in that** a filling of metallic or inorganic-nonmetallic particles which are strongly oxidized and have a relatively great expansion coefficient in comparison with the protective tube (8) is incorporated as metallic components.

## Revendications

1. Sonde de haute température comprenant une résistance de mesure (1.1) disposée dans une partie en céramique, laquelle est entourée par une poudre de céramique (6), **caractérisée en ce que**
- la partie en céramique est réalisée sous la forme d'un enrobage (1.3) en céramique pour la résistance de mesure (1.1) et les fils de raccordement de résistance de mesure (1.2) soulagés en traction sont reliés avec des fils conducteurs internes (4) et par la suite avec un câble de raccordement électrique (14),
- la résistance de mesure (1.1) enrobée et les fils conducteurs internes (4) sont disposés dans un tube de protection (8) métallique qui présente un rétrécissement dans la zone de la résistance de mesure (1.1),
- la poudre de céramique (6) remplit densément le tube de protection (8) et contient des additifs à base de composés d'oxyde diffusant de l'oxygène,
- des composants supplémentaires sont disposés du côté du raccordement entre le câble de raccordement (14) et le tube de protection (8), lesquels possèdent un coefficient de dilatation céramique supérieur à celui du tube de protection (8) et
- la poudre de céramique (6) contient des additifs de composés d'oxyde diffusant de l'oxygène à des températures de service de la sonde supérieures à 500 °C.

2. Sonde de haute température selon la revendication 1, **caractérisée en ce que** la poudre de céramique (6) utilisée est de l'oxyde d'aluminium ou de l'oxyde de magnésium auquel est mélangé un agent d'oxydoréduction métallique ou anorganique non métallique diffusant de l'oxygène dans une dépendance volumique à l'espace intérieur du tube de protection.

3. Sonde de haute température selon la revendication 1 ou 2, **caractérisée en ce que** l'enrobage (1.3) en céramique dans lequel est disposée la résistance de mesure (1.1) est appliqué sur une longueur telle qu'il s'étend au-delà du point de liaison (3) des fils de raccordement de résistance de mesure (1.2) avec les fils conducteurs internes (4) avec une isolation en céramique propre ou avec les fils conducteurs internes (4.1) d'un câble sous gaine (5) à isolation minérale, et l'espace entre la résistance de mesure (1.1) avec les fils de raccordement de résistance de mesure (1.2) et l'enrobage (1.3) est rempli d'un mastic à haute température (26).

4. Sonde de haute température selon l'une des revendications précédentes, **caractérisée en ce qu'**une douille intermédiaire (21) en aluminium est disposée en tant que composant supplémentaire.

5. Sonde de haute température selon l'une des revendications précédentes, **caractérisée en ce qu'**une résistance de mesure à couche mince en platine est utilisée comme résistance de mesure (1.1).

6. Sonde de haute température selon l'une des revendications 3 à 5, **caractérisée en ce que** le câble sous gaine (5) à isolation minérale est soudé contre le tube de protection (8), le point de soudage se trouvant en dehors de la partie du tube de protection en contact avec le fluide, immédiatement derrière une borne de processus.

7. Sonde de haute température selon la revendication 6, **caractérisée en ce que** la borne de processus contient un collet (10) soudé sur le tube de protection (8), lequel peut être fixé sur l'objet à mesurer à l'aide de moyens d'assemblage amovibles.

8. Sonde de haute température selon l'une des revendications 3 à 7, **caractérisée en ce que** l'enrobage (1.3) en céramique est glissé sur la résistance de mesure (1.1), le point de liaison (3) des fils de raccordement de résistance de mesure (1.2) vers les parties en saillie des conducteurs intérieurs (5.1) du câble sous gaine (5) à isolation minérale de telle sorte qu'il s'étend jusqu'à l'extrémité du tube extérieur (5.2) du câble sous gaine (5) ou dépasse légèrement sous le tube extérieur (5.2) du câble sous gaine (5), l'espace intérieur de l'enrobage (1.3) en céramique étant rempli de mastic à haute température (26), de manière à former ainsi un assemblage monobloc.

9. Sonde de haute température selon la revendication 8, **caractérisée en ce que** le point de liaison intérieur (15) entre le câble sous gaine (5) et le câble de raccordement (14) ou entre l'extrémité du tube de protection (8) et le câble de raccordement (14) présente un surmoulage en matière plastique (17) stable à haute température.

10. Sonde de haute température selon la revendication 1, **caractérisée en ce que** des tôles conductrices internes profilées (7) sont utilisées en tant que fils conducteurs internes (4), sur les extrémités desquelles sont enfilées des pièces façonnées en céramique (20.1, 20.2) de forme tubulaire avec des contours intérieurs et extérieurs profilés, les tôles conductrices internes profilées (7), du côté de la sonde, étant soudées avec la résistance de mesure (1.1) et la résistance de mesure (1.1) ainsi que le point de soudage entre la résistance de mesure (1.1) et les tôles conductrices internes (7) étant recouverts par l'enrobage en céramique (1.3), lequel est rempli de mastic à haute température (26),
**en ce que** cette structure est disposée dans le tube de protection (8), le tube de protection (8) étant rempli avec la poudre de céramique (6) qui contient de l'oxyde diffusant de l'oxygène,
**en ce que** le tube de protection (8) présente dans la partie éloignée de la résistance de mesure un diamètre intérieur plus grand, **en ce que** des bagues métalliques (28) ayant des coefficients de dilatation élevés sont disposées autour des pièces façonnées en céramique (20.1, 20.2) et de grandes ouvertures d'interstice sont obtenues entre les pièces façonnées en céramique (20.1, 20.2) et les bagues métalliques (28), et **en ce que** le câble de raccordement (14) est raccordé aux extrémités des tôles conductrices internes (7).

11. Sonde de haute température selon l'une des revendications précédentes, **caractérisée en ce que** le tube de protection (8) est réalisé sous la forme d'une pièce emboutie sur laquelle est usiné un collet d'étanchéité ou sous la forme d'une pièce tournée munie d'un alésage à trou profond.

12. Sonde de haute température selon l'une des revendications précédentes, **caractérisée en ce que** des composants métalliques ayant des coefficients de dilatation élevés et une surface partiellement fortement oxydée sont disposés dans la partie supérieure et/ou centrale du tube de protection (8), lesquels compensent la réduction de volume relative du volume occupé par la poudre de céramique (6) lorsque les températures augmentent par rapport à l'espace intérieur du tube de protection et délivrent de l'oxygène dans l'espace intérieur du tube de protection depuis la surface fortement oxydée.

13. Sonde de haute température selon la revendication 12, **caractérisée en ce que** les composants métalliques introduits sont une masse de remplissage composée de grains métalliques ou anorganiques non métalliques, lesquels sont fortement oxydés et possèdent un coefficient de dilatation relativement élevé par rapport au tube de protection (8).
